# EUROPEAN PATENT APPLICATION

(11) **EP 3 231 989 A2**
(43) Date of publication of application: **18.10.2017**
(21) Application number: 17156241.6
(22) Date of filing: 15.02.2017
(51) Int. Cl.: F01D 5/00, F01D 5/28

(54) **SYSTEM AND METHOD FOR REJUVENATING COATED COMPONENTS OF GAS TURBINE ENGINES**

(30) Priority: 18.02.2016 US 201615046730
(71) Applicant: General Electric Company, Schenectady, NY 12345 (US)
(72) Inventor: GUPTA, Bhupendra Kumar, Cincinnati, OH 45215 (US); ROSENZWEIG, Mark, Cincinnati, OH 45215 (US)
(74) Representative: Williams, Andrew Richard

(57) **Abstract**

The present disclosure is directed to a method for rejuvenating a damaged coated component of a gas turbine engine (10). The method includes uninstalling the damaged coated component from the gas turbine engine (10). The method also includes isolating a first coated portion (105) of the component of the gas turbine engine (10) from a second coated portion (108) of the component. In addition, the method includes simultaneously depositing a first coating material (112) on the first coated portion (105) of the component and a different, second coating material (114) on the second coated portion (108) of the component. The method also includes reinstalling the rejuvenated coated component into the gas turbine engine (10).

## Description

### FIELD OF THE INVENTION

The present invention relates generally to gas turbine engines, and more specifically, to systems and methods for rejuvenating coated components, such as turbine blades, by simultaneously depositing multiple coatings thereon.

### BACKGROUND OF THE INVENTION

A gas turbine engine generally includes, in serial flow order, a compressor section, a combustion section, a turbine section and an exhaust section. In operation, air enters an inlet of the compressor section where one or more axial or centrifugal compressors progressively compress the air until it reaches the combustion section. Fuel is mixed with the compressed air and burned within the combustion section to provide combustion gases. The combustion gases are routed from the combustion section through a hot gas path defined within the turbine section and then exhausted from the turbine section via the exhaust section.

In particular configurations, the turbine section includes, in serial flow order, a high pressure (HP) turbine and a low pressure (LP) turbine. The HP turbine and the LP turbine each include various rotatable turbine components such as a rotor shaft, rotor disks mounted or otherwise carried by the rotor shaft, turbine blades mounted to and radially extending from the periphery of the disks, and various stationary turbine components such as stator vanes or nozzles, turbine shrouds, and engine frames. The rotatable and stationary turbine components at least partially define the hot gas path through the turbine section. For example, the gas turbine buckets or blades generally have an airfoil shape designed to convert the thermal and kinetic energy of the flow path gases into mechanical rotation of the rotor. As the combustion gases flow through the hot gas path, thermal energy is transferred from the combustion gases to the rotatable and stationary turbine components.

Turbine blades may be constructed of a number of superalloys (e.g., nickel-based superalloys), as well as ceramic matrix composites coated with an environmental barrier coating to avoid oxidation and recession in the presence of high temperature steam during operation of the engine. Current coating processes for engine components include a two-step process that first includes coating a first portion of the component with a corrosion-resistant coating (such as a chromide coating) and then subsequently includes coating a second portion of the component with an oxidation-prohibiting coating, such as an aluminide coating. For example, for high-pressure turbine blades, the shank is first coated via a pack process using a powder chromide coating and a later step includes coating the airfoil of the turbine blade with an aluminide coating.

One of the issues associated with conventional two-step coating techniques, however, includes chloride gases leaking from the pack during the chromide coating process which can damage the airfoil. More specifically, in engine components with internal aluminide coatings, the depletion of aluminum due to reaction with chloride gases can result in low engine performance and/or a high scrap rate.

In addition, during operation of the gas turbine engine, the coatings originally applied to the turbine blades begin to wear off due to oxidation and other environmental conditions within the turbine engine. Conventional repair methods for turbine blades require "full repair" of the affected blades, which includes uninstalling the turbine blade from the engine, stripping the previously applied coatings therefrom, and repeating the two-step process described above. Thus, full repair of the turbine blades can be time-consuming and expensive.

In view of the aforementioned, an improved system and method for rejuvenating coated turbine blades rather than requiring full repair of such blades would be advantageous. More specifically, a system and method for rejuvenating turbine blades by simultaneously depositing multiple coatings on the previously-coated blade would be desired in the art.

### BRIEF DESCRIPTION OF THE INVENTION

Aspects and advantages of the invention will be set forth in part in the following description, or may be obvious from the description, or may be learned through practice of the invention.

In one aspect, the present disclosure is directed to a method for rejuvenating a damaged coated component of a gas turbine engine. The method includes uninstalling the damaged coated component from the gas turbine engine. The method also includes isolating a first coated portion of the component of the gas turbine engine from a second coated portion of the component. In addition, the method includes simultaneously depositing a first coating material on the first coated portion of the component and a different, second coating material on the second coated portion of the component. The method also includes reinstalling the rejuvenated coated component into the gas turbine engine.

In another aspect, the present disclosure is directed to a kit for rejuvenating a damaged coated component of a gas turbine engine. The kit includes a first coating material and a second coating material, wherein the first and second coating materials are different. The kit also includes a maskant for isolating a first coated portion of the component of the gas turbine engine from a second coated portion of the component and a coating system configured to simultaneously deposit the first and second coating materials on the first and second coated portions of the component, respectively.

In yet another aspect, the present disclosure is directed to a method for rejuvenating a damaged coated turbine blade of a gas turbine engine. The method includes uninstalling the damaged coated turbine blade from the gas turbine engine. The method also includes placing a coated shank of the turbine blade in a masking chamber having a masking lid so as to isolate the shank from a coated airfoil of the turbine blade. Another step includes filling a masking chamber with a chromium-based powder coating. Thus, the method also includes simultaneously depositing an aluminum-based coating on the airfoil via diffusion coating.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

The subject matter which is regarded as the invention is particularly pointed out and distinctly claimed in the concluding part of the specification. The invention, however, may be best understood by reference to the following description taken in conjunction with the accompanying drawing figures in which:
FIG. 1 illustrates a schematic cross-sectional view of one embodiment of a gas turbine engine according to the present disclosure;
FIG. 2 illustrates a perspective view of one embodiment of a turbine blade of a gas turbine engine according to the present disclosure;
FIG. 3 illustrates a schematic view of one embodiment of a kit for rejuvenating a damaged coated component of a gas turbine engine according to the present disclosure;
FIG. 4 illustrates a schematic flow diagram of one embodiment of a process steps for rejuvenating a damaged coated component of a gas turbine engine according to the present disclosure; and
FIG. 5 illustrates a flow diagram of one embodiment of a method for rejuvenating a damaged coated component of a gas turbine engine according to the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Chemical elements are discussed in the present disclosure using their common chemical abbreviation, such as commonly found on a periodic table of elements. For example, aluminum is represented by its common chemical abbreviation Al; chromium is represented by its common chemical abbreviation Cr; and so forth.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

Generally, the present disclosure is directed to an improved system and method for rejuvenating damaged coated components of gas turbine engines by simultaneously depositing multiple coatings at different locations on the component. More specifically, in certain embodiments, the method includes uninstalling the damaged coated component from the gas turbine engine and isolating a first coated portion of the component from a second coated portion of the component. For example, the component may include a turbine blade having a coated airfoil and a shank that may or may not be coated. Thus, the method includes simultaneously depositing a first coating material on the first coated or uncoated portion (i.e. the shank) of the component and a different, second coating material on the second coated portion (i.e. the airfoil) of the component. The method also includes reinstalling the rejuvenated coated component into the gas turbine engine.

As such, even though the chromium-based powder and the aluminum-based material are deposited onto the turbine blade simultaneously, the coating materials do not contact each other or neighboring portions of the blade. Thus, the present disclosure provides a robust process that reduces time and costs associated with coating engine components. Further, by depositing the coating materials at the same time, degradation of the coating materials is minimized. In addition, previously-applied coatings do not need to be removed from the component before the rejuvenation process begins. By not removing the previously-applied coatings from the component, the present disclosure enhances the life of the part.

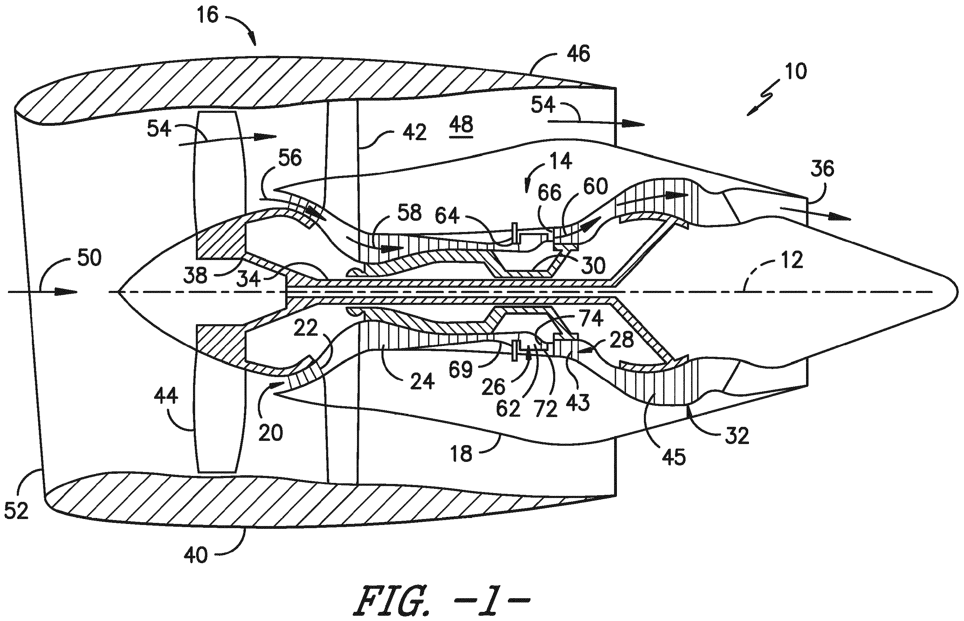

Referring now to the drawings, FIG. 1 illustrates a schematic cross-sectional view of one embodiment of a gas turbine engine 10 (high-bypass type) according to the present disclosure. More specifically, the gas turbine engine 10 may include an aircraft engine, e.g. for an airplane, helicopter, or similar. As shown, the gas turbine engine 10 has an axial longitudinal centerline axis 12 therethrough for reference purposes. Further, as shown, the gas turbine engine 10 preferably includes a core gas turbine engine generally identified by numeral 14 and a fan section 16 positioned upstream thereof. The core engine 14 typically includes a generally tubular outer casing 18 that defines an annular inlet 20. The outer casing 18 further encloses and supports a booster 22 for raising the pressure of the air that enters core engine 14 to a first pressure level. A high pressure, multi-stage, axial-flow compressor 24 receives pressurized air from the booster 22 and further increases the pressure of the air. The compressor 24 includes rotating blades and stationary vanes that have the function of directing and compressing air within the turbine engine 10. The pressurized air flows to a combustor 26, where fuel is injected into the pressurized air stream and ignited to raise the temperature and energy level of the pressurized air. The high energy combustion products flow from the combustor 26 to a first (high pressure) turbine 28 for driving the high pressure compressor 24 through a first (high pressure) drive shaft 30, and then to a second (low pressure) turbine 32 for driving the booster 22 and the fan section 16 through a second (low pressure) drive shaft 34 that is coaxial with the first drive shaft 30. After driving each of the turbines 28 and 32, the combustion products leave the core engine 14 through an exhaust nozzle 36 to provide at least a portion of the jet propulsive thrust of the engine 10.

The fan section 16 includes a rotatable, axial-flow fan rotor 38 that is surrounded by an annular fan casing 40. It will be appreciated that fan casing 40 is supported from the core engine 14 by a plurality of substantially radially-extending, circumferentially-spaced outlet guide vanes 42. In this way, the fan casing 40 encloses the fan rotor 38 and the fan rotor blades 44. The downstream section 46 of the fan casing 40 extends over an outer portion of the core engine 14 to define a secondary, or bypass, airflow conduit 48 that provides additional jet propulsive thrust.

From a flow standpoint, it will be appreciated that an initial airflow, represented by arrow 50, enters the gas turbine engine 10 through an inlet 52 to the fan casing 40. The airflow passes through the fan blades 44 and splits into a first air flow (represented by arrow 54) that moves through the conduit 48 and a second air flow (represented by arrow 56) which enters the booster 22.

The pressure of the second compressed airflow 56 is increased and enters the high pressure compressor 24, as represented by arrow 58. After mixing with fuel and being combusted in the combustor 26, the combustion products 60 exit the combustor 26 and flow through the first turbine 28. The combustion products 60 then flow through the second turbine 32 and exit the exhaust nozzle 36 to provide at least a portion of the thrust for the gas turbine engine 10.

Still referring to FIG. 1, the combustor 26 includes an annular combustion chamber 62 that is coaxial with the longitudinal centerline axis 12, as well as an inlet 64 and an outlet 66. As noted above, the combustor 26 receives an annular stream of pressurized air from a high pressure compressor discharge outlet 69. Fuel is injected from a fuel nozzle to mix with the air and form a fuel-air mixture that is provided to the combustion chamber 62 for combustion. Ignition of the fuel-air mixture is accomplished by a suitable igniter, and the resulting combustion gases 60 flow in an axial direction toward and into an annular, first stage turbine nozzle 72. The nozzle 72 is defined by an annular flow channel that includes a plurality of radially-extending, circumferentially-spaced nozzle vanes 74 that turn the gases so that they flow angularly and impinge upon the first stage turbine blades 43 of the first turbine 28. Similarly, the second stage turbine 32 may include a plurality of second stage turbine blades 45. As shown in FIG. 1, the first turbine 28 preferably rotates the high-pressure compressor 24 via the first drive shaft 30, whereas the low-pressure turbine 32 preferably drives the booster 22 and the fan rotor 38 via the second drive shaft 34.

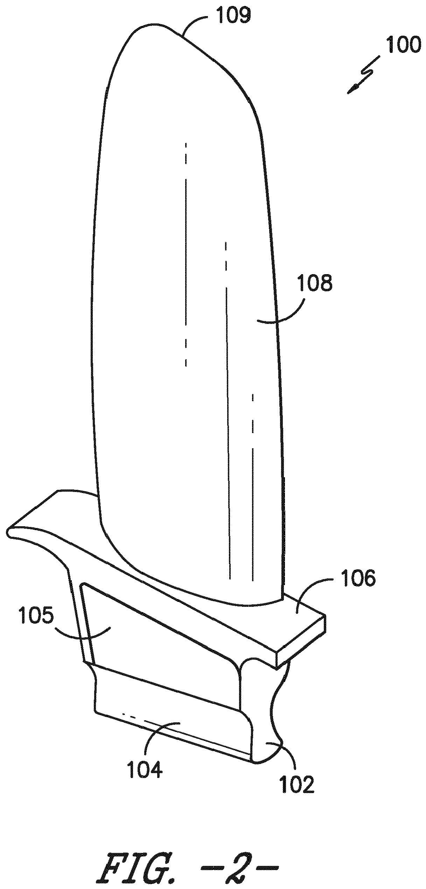

Referring now to FIG. 2, an exemplary turbine blade 100 of the gas turbine engine 10 of FIG. 1 is illustrated. As shown, the blade 100 is generally represented as being adapted for mounting to a disk or rotor (not shown) within the turbine section of the gas turbine engine 10. For this reason, the turbine blade 100 is represented as including a dovetail 102 for anchoring the blade 100 to a turbine disk by interlocking with a complementary dovetail slot formed in the circumference of the disk. As represented in FIG. 2, the interlocking features may include protrusions referred to as tangs 104 that engage recesses defined by the dovetail slot. The blade 100 is further shown as having a platform 106 that separates an airfoil 108 from a shank 105 on which the dovetail 102 is defined. The turbine blade 100 also includes a blade tip 109 disposed opposite the platform 106. As such, the blade tip 109 generally defines the radially outermost portion of the blade 100 and, thus, may be configured to be positioned adjacent to a stationary shroud (not shown) of the gas turbine engine 10.

Because they are directly subjected to hot combustion gases during operation of the engine, the airfoil 108, platform 106, and/or blade tip 109 typically have very demanding material requirements. The platform 106 and the blade tip 109 are further critical regions of the turbine blade 100 in that they create the inner and outer flowpath surfaces for the hot gas path within the turbine section. In addition, the platform 106 creates a seal to prevent mixing of the hot combustion gases with lower temperature gases to which the shank 105, its dovetail 102, and the turbine disk are exposed. Further, the blade tip 109 may be subjected to creep due to high strain loads and wear interactions between it and the shroud surrounding the blade tips 109. The dovetail 102 is also a critical region in that it is subjected to wear and high loads resulting from its engagement with a dovetail slot and the high centrifugal loading generated by the blade 100.

Thus, the turbine blade 100 (or portions thereof) is typically coated with various coatings that are dependent on turbine operations and associated temperatures. For example, in particular embodiments, the shank 105 may have been previously coated with a chromium-based material, whereas the airfoil 108 may have been previously coated with an aluminum-based material. During operation, such coatings begin to wear off due to oxidation and other environmental conditions within the turbine engine 10. Thus, the present disclosure is directed to systems and methods for rejuvenating such turbine blades. Though the present disclosure is described in reference to a turbine blade, it should be understood that the coating systems and methods as described herein may be applied to any gas turbine engine component. For example, in certain embodiments, the gas turbine engine components that may be coated according to the present disclosure in addition to the turbine blade may include but are not limited to fan blades, compressor blades, nozzles, shrouds, shroud supports, frames, turbine vanes, guide vanes, compressor vanes, or similar.

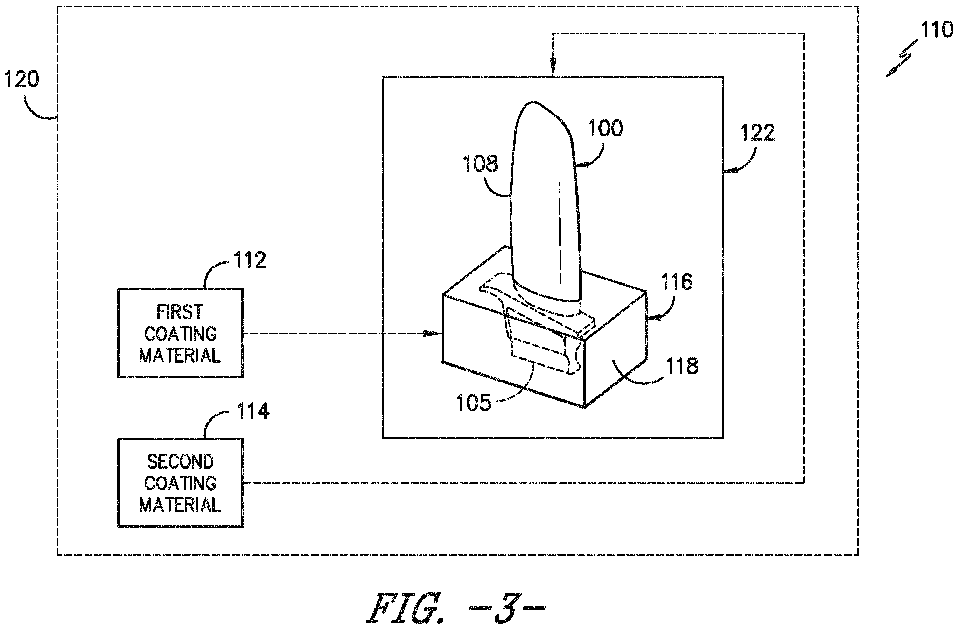

Referring now to FIG. 3, a schematic view of a kit 110 for rejuvenating such coated components, e.g. the coated turbine blades 100, of the gas turbine engine 10 is illustrated. As shown, the kit 110 includes a first coating material 112 and a second, different coating material 114. Although the kit 110 is illustrated having two coating materials, it should be understood by those of ordinary skill in the art that any number of coating materials may be used according to the present disclosure. Further, the first and second coating materials 112, 114 may include any suitable coatings, including but not limited to chromium-based coatings, aluminum-based coatings, silicon-based coatings, platinum coatings, palladium coatings, or any other suitable coating materials. For example, the chromium-based coatings as described herein may include the chromium coating and related chromizing process as described in U.S. Patent Application Publication No.: 2010/0151124 entitled "Slurry Chromizing Process" filed on August 3, 2007, which is incorporated herein by reference in its entirety. More specifically, in particular embodiments, the coating materials 112, 114 may include aluminide (i.e. Al coating over a Ni, Co, or Fe base alloy), chromide (i.e. Cr coating over Ni, Co, or Fe base alloy), silicide (i.e. silicon coating over Ni, Co, Fe base alloy), Pt-Al (i.e. platinum plating then an aluminide coating), Pd-Al (i.e. palladium plating then an aluminide coating, Hf-Al (i.e. hafniding and aluminiding), Cr-Al on one surface with pure chromide or aluminide on another surface, Al-Si on one surface with pure Cr or Al on another surface, Al with 5%Si/Cr coating, or any other suitable coatings or combinations thereof.

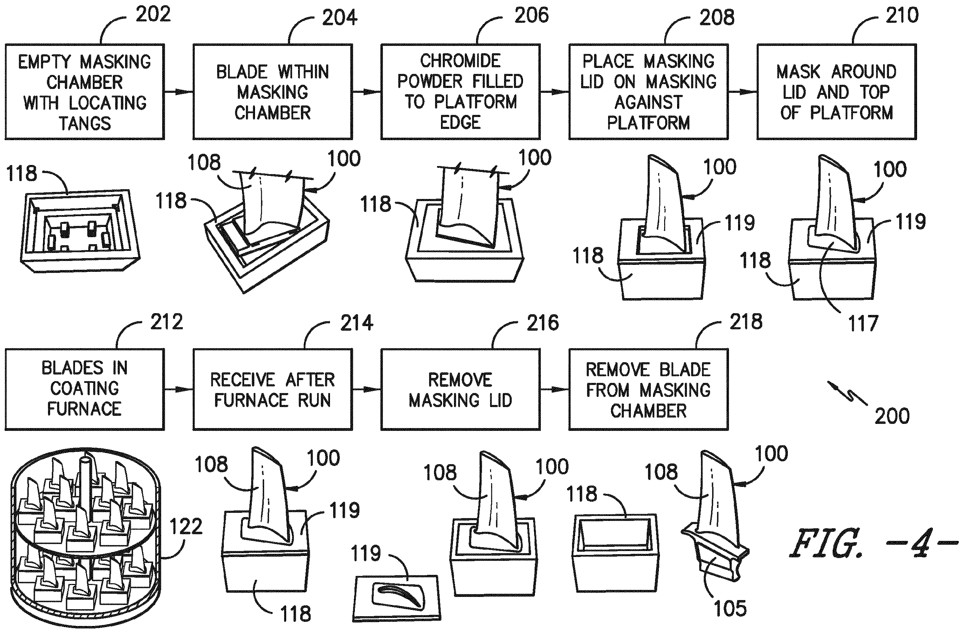

The kit 110 also includes a maskant 116 for isolating a first coated portion of the component from a second coated portion of the component. More specifically, as shown in the illustrated embodiment, the maskant 116 may include a masking chamber 118. In such an embodiment, the masking chamber 118 is configured to receive a first coated portion of the component, i.e. the coated shank 105 of the turbine blade 100, so as to isolate the first coated portion from the second coated portion, i.e. the airfoil 108 of the turbine blade 100, which is described in more detail in regards to FIG. 4 below.

Further, as shown, the kit 110 includes a coating system 120 configured to simultaneously deposit the first and second coating materials 112, 114 on the first and second coated portions 105, 108 of the component, respectively. For example, in one embodiment, the masking chamber 116 may be filled with the first coating material 112, e.g. a chromium-based powder. In addition, as shown, the coating system 120 may include a coating furnace 122 configured to apply the second coating material 114 on the second coated portion 108 of the component, i.e. the airfoil 108 of the turbine blade 100 as the first coating material is coating the first coated portion of the component. Thus, in such embodiments, the second coating material 114 may include a vapor-based aluminide material.

Referring now to FIG. 4, a schematic flow diagram of one embodiment of a process 200 for rejuvenating a previously coated turbine blade 100 of the gas turbine engine 10 is illustrated. As shown at 202, the process 200 includes providing an empty masking chamber 118 with optional locating tangs that are configured to engage the tang 104 of shank 105 of the turbine blade 100 so as to retain the turbine blade 100 therein. Thus, as shown at 204, the process 200 includes uninstalling the turbine blade 100 from the engine 10 and placing the coated turbine blade 100 within the masking chamber 118. As shown at 206, the process 200 includes filling the masking chamber 118 to the platform edge with the first coating material 112, which as mentioned, may be a chromium-based powder. As shown at 208, the process 200 includes placing a masking lid 119 on the masking chamber 118 so as to isolate the airfoil 108 of the turbine blade 100 from the shank 105 of the turbine blade 100. As shown at 210, the process 200 may also optionally include placing an additional maskant 117 (e.g. a maskant film or similar) around the masking lid 119 and the top of the masking chamber 118 so as to further isolate the airfoil 108 of the turbine blade 100 from the shank 105 of the turbine blade 100. Such isolation prevents the first coating material 112 from damaging the airfoil 108 of the turbine blade 100. As shown at 212, the process 200 includes placing the turbine blade 100 (or a plurality of turbine blades 100) in the coating furnace 122. Thus, the method 200 includes simultaneously depositing the first coating material 112 on the shank 105 of the turbine blade 100 and the second coating material 114 on the airfoil 108 of the turbine blade 100, i.e. via the coating furnace 122.

More specifically, in certain embodiments, the coating furnace 122 is configured to apply the second coating material 114 via diffusion coating. For typical diffusion coating processes, aluminum-based materials (e.g. aluminides), chrome-based materials, and/or silicon-based materials may be mixed with an activator (e.g. a halide activator) and heated via the coating furnace 122 to form gaseous metal compounds which result in the deposition of the metal on the surface of the part to be coated, i.e. the airfoil 108 of the turbine blade 100. Suitable temperatures for diffusion coating processes may be from about 1500°F (about 815°C) to about 2200°F (about 1205°C), more preferably from about 1900°F (about 1040°C) to about 2100°F (about 1150°C). Further, the turbine blade 100 may remain in the coating furnace 122 for any suitable amount of time during the diffusion coating process depending on a desired thickness of the coating. For example, in one embodiment, the turbine blade 100 may remain in the coating furnace from about one (1) hour to about ten (10) hours. In additional embodiments, the turbine blade 100 may remain in the coating furnace 122 for less than one hour or for greater than ten hours. Thus, the gaseous metal compounds decompose upon contact with the surfaces of the part, thereby depositing the diffusion coating on the surface thereof. In additional embodiments, the airfoil 108 (or second coated portion of the component) may coated using any other suitable coating techniques in addition to diffusion coating, including but not limited to slurry coating, plating, and/or pack or powder coating.

As shown at 214, the process 200 further includes removing the turbine blade 100 from the coating furnace 122 and allowing the blade 100 to cool. As shown at 216, the masking lid 119 can then be removed from atop the masking chamber 118. As shown at 218, the coated turbine blade 100 is removed from the masking chamber 118. Thus, the previously-coated turbine blade 100 of the present disclosure is rejuvenated using a single-step coating process (i.e. both coatings are deposited onto the blade 100 in different locations at the same time).

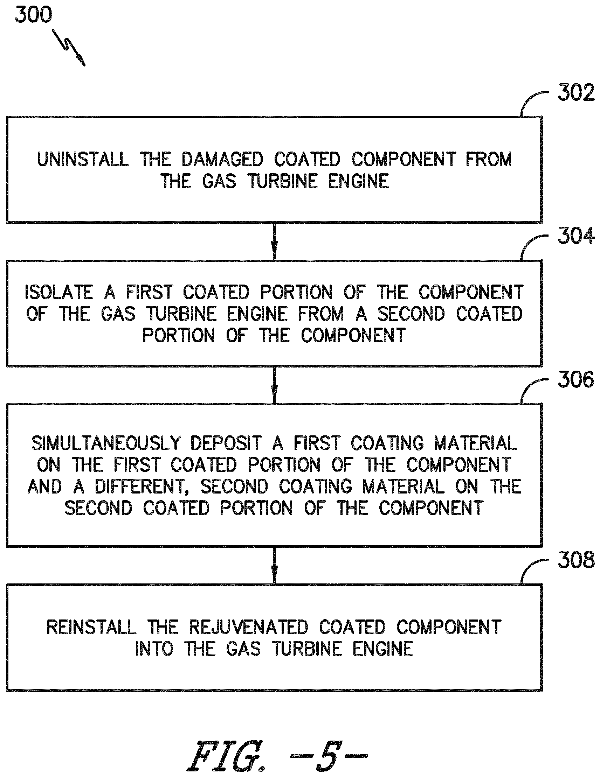

Referring now to FIG. 5, a flow diagram of one embodiment of a method 300 for coating a component of a gas turbine engine 10 is illustrated. As shown at 302, the method 300 includes uninstalling the damaged coated component from the gas turbine engine 10. As mentioned, the component of the gas turbine engine 10 may include any suitable component such as a turbine blade, a fan blade, a compressor blade, a nozzle, shrouds, shroud supports, frames, a turbine vane, a guide vane, or a compressor vane.

As shown at 304, the method 300 includes isolating a first coated portion of the component of the gas turbine engine from a second coated portion of the component. More specifically, where the coated component is a turbine blade 100, the step of isolating the first coated portion of the blade 100 of the gas turbine engine 10 from the second coated portion of the blade 100 may include placing a shank of the blade 100 in a masking chamber and placing a masking lid on the masking chamber against a platform of an airfoil of the blade so as to isolate the shank from the airfoil.

As shown at 306, the method 300 also includes simultaneously depositing a first coating material on the first coated portion of the component and a different, second coating material on the second coated portion of the component. In certain embodiments, the step of simultaneously depositing the first coating material on the first coated portion of the component and the second coating material on the second coated portion of the component may include diffusion coating, plating, slurry coating, powder coating, or any other suitable coating process. As shown at 308, the method 300 includes reinstalling the rejuvenated coated component into the gas turbine engine 10.

Further, the first and second coating materials may include chromium-based coatings, aluminum-based coatings, silicon-based coatings, platinum coatings, palladium coatings, or any other suitable coating materials such as those described herein. More specifically, the first coating material may include a chromium-based material, whereas the second coating material may include an aluminum-based material. In such embodiments, the step of simultaneously depositing the first coating material on the first coated portion of the component and the second coating material on the second coated portion of the component may include filling the masking chamber with the chromium-based material before placing the masking lid on the masking chamber so as to coat the shank and depositing the airfoil with the aluminum-based material.

In additional embodiments, the step of depositing the airfoil with the aluminum-based material may include placing the turbine blade in a coating furnace and exposing the airfoil to a vapor phase aluminum-based material so as to coat the airfoil, as previously described.

In yet another embodiment, the method 300 may further include removing the turbine blade 100 from the coating furnace, cooling the turbine blade 100 while the shank remains in the masking chamber, removing the masking lid from the masking chamber, and removing the shank from the masking chamber.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses. Any features or elements of any of the aspects or embodiments may be readily combined.
1. A method for rejuvenating a damaged coated component of a gas turbine engine, the method comprising:
   uninstalling the damaged coated component from the gas turbine engine;
   isolating a first coated portion of the component of the gas turbine engine from a second coated portion of the component;
   simultaneously depositing a first coating material on the first coated portion of the component and a different, second coating material on the second coated portion of the component; and,
   reinstalling the rejuvenated coated component into the gas turbine engine.
2. The method of clause 1, wherein the coated component of the gas turbine engine comprises at least one of a turbine blade, a fan blade, a compressor blade, a nozzle, shrouds, shroud supports, frames, a turbine vane, a guide vane, or a compressor vane.
3. The method of clause 1 or 2, wherein simultaneously depositing the first coating material on the first coated portion of the component and the second coating material on the second coated portion of the component comprises at least one of diffusion coating, plating, slurry coating, or powder coating.
4. The method of any preceding clause, wherein the first coated portion comprises a shank of the turbine blade and the second coated portion comprises an airfoil of the turbine blade.
5. The method of any preceding clause, wherein the shank was previously coated with a chromium-based material and the airfoil was being previously coated with an aluminum-based material.
6. The method of any preceding clause, wherein isolating the first coated portion of the component of the gas turbine engine from the second coated portion of the component further comprises:
   placing the shank in a masking chamber, and
   placing a masking lid on the masking chamber against a platform of the airfoil so as to isolate the shank from the airfoil.
7. The method of any preceding clause, wherein the first and second coating materials comprise at least one of chromium-based materials, aluminum-based materials, silicon-based materials, platinum materials, or palladium materials.
8. The method of any preceding clause, wherein the first coating material comprises a chromium-based material and the second coating material comprises an aluminum-based material.
9. The method of any preceding clause, wherein simultaneously depositing the first coating material on the first coated portion of the component and the second coating material on the second coated portion of the component further comprises:
   filling the masking chamber with the chromium-based material before placing the masking lid on the masking chamber so as to coat the shank, and
   depositing the airfoil with the aluminum-based material.
10. The method of any preceding clause, wherein depositing the airfoil with the aluminum-based material further comprises:
   placing the turbine blade in a coating furnace, and
   exposing the airfoil to a vapor phase aluminum-based material so as to coat the airfoil.
11. The method of any preceding clause, further comprising:
   removing the turbine blade from the coating furnace,
   cooling the turbine blade while the shank remains in the masking chamber,
   removing the masking lid from the masking chamber,
   removing the shank from the masking chamber, and
   reinstalling the turbine blade within the gas turbine engine.
12. A kit for rejuvenating a damaged coated component of a gas turbine engine, the kit comprising:
   a first coating material;
   a second coating material, the first and second coating materials being different;
   a maskant for isolating a first coated portion of the component of the gas turbine engine from a second coated portion of the component; and
   a coating system configured to simultaneously deposit the first and second coating materials on the first and second coated portions of the component, respectively.
13. The kit of clause 12, wherein the maskant comprises a masking chamber.
14. The kit of clause 12 or 13, wherein the masking chamber is filled with the first coating material, the first coating material comprising a chromium-based powder.
15. The kit of any of clauses 12 to 14, wherein the first and second coating materials comprise at least one of chromium-based coatings, aluminum-based coatings, silicon-based coatings, platinum coatings, or palladium coatings.
16. The kit of any of clauses 12 to 15, wherein the coating system comprises a coating furnace configured to apply the second coating material on the second coated portion of the component, the second coating material comprising an aluminum-based material.
17. The kit of any of clauses 12 to 16, wherein the coated component of the gas turbine engine comprises at least one of a turbine blade, a fan blade, a compressor blade, a nozzle, shrouds, shroud supports, frames, a turbine vane, a guide vane, or a compressor vane.
18. The kit of any of clauses 12 to 17, wherein simultaneously depositing the first coating on the first coated portion of the component and the second coating on the second coated portion of the component comprises at least one of diffusion coating, plating, slurry coating, or powder coating.
19. The kit of any of clauses 12 to 18, wherein the first coated portion comprises a shank of the turbine blade and the second coated portion comprises an airfoil of the turbine blade.
20. A method for rejuvenating a damaged coated turbine blade of a gas turbine engine, the method comprising:
   uninstalling the damaged coated turbine blade from the gas turbine engine;
   placing a coated shank of the turbine blade in a masking chamber having a masking lid so as to isolate the shank from a coated airfoil of the turbine blade;
   filling a masking chamber with a chromium-based powder coating; and
   simultaneously depositing an aluminum-based coating on the airfoil via diffusion coating.

## Claims

1. A method for rejuvenating a damaged coated component of a gas turbine engine (10), the method comprising:
uninstalling the damaged coated component from the gas turbine engine (10);
isolating a first coated portion (105) of the component of the gas turbine engine (10) from a second coated portion (108) of the component;
simultaneously depositing a first coating material (112) on the first coated portion (105) of the component and a different, second coating material (114) on the second coated portion (108) of the component; and,
reinstalling the rejuvenated coated component into the gas turbine engine (10).

2. The method of claim 1, wherein the coated component of the gas turbine engine (10) comprises at least one of a turbine blade (100), a fan blade, a compressor blade, a nozzle, shrouds, shroud supports, frames, a turbine vane, a guide vane, or a compressor vane.

3. The method of claim 1 or claim 2, wherein simultaneously depositing the first coating material (112) on the first coated portion (105) of the component and the second coating material (114) on the second coated portion (108) of the component comprises at least one of diffusion coating, plating, slurry coating, or powder coating.

4. The method of claim 2 or claim 3, wherein the first coated portion (105) comprises a shank (105) of the turbine blade (100) and the second coated portion (108) comprises an airfoil (108) of the turbine blade (100).

5. The method of claim 4, wherein the shank (105) was previously coated with a chromium-based material and the airfoil (108) was being previously coated with an aluminum-based material.

6. The method of claim 4 or claim 5, wherein isolating the first coated portion (105) of the component of the gas turbine engine (10) from the second coated portion (108) of the component further comprises:
placing the shank (105) in a masking chamber (118), and
placing a masking lid (119) on the masking chamber (118) against a platform (106) of the airfoil (108) so as to isolate the shank (105) from the airfoil (108).

7. The method of any preceding claim, wherein the first and second coating materials (112, 114) comprise at least one of chromium-based materials, aluminum-based materials, silicon-based materials, platinum materials, or palladium materials.

8. The method of claim 7, wherein the first coating material (112) comprises a chromium-based material and the second coating material (114) comprises an aluminum-based material.

9. The method of claim 7 or claim 8, wherein simultaneously depositing the first coating material (112) on the first coated portion (105) of the component and the second coating material (114) on the second coated portion (108) of the component further comprises:
filling the masking chamber (118) with the chromium-based material before placing the masking lid (119) on the masking chamber (118) so as to coat the shank (105), and
depositing the airfoil (108) with the aluminum-based material.

10. The method of any of claims 7 to 9, wherein depositing the airfoil (108) with the aluminum-based material further comprises:
placing the turbine blade (100) in a coating furnace (122), and
exposing the airfoil (108) to a vapor phase aluminum-based material so as to coat the airfoil (108).

11. The method of any of claims 7 to 10, further comprising:
removing the turbine blade (100) from the coating furnace (122),
cooling the turbine blade (100) while the shank (105) remains in the masking chamber (118),
removing the masking lid (119) from the masking chamber (118),
removing the shank (105) from the masking chamber (118), and
reinstalling the turbine blade (100) within the gas turbine engine (10).

12. A kit for rejuvenating a damaged coated component of a gas turbine engine (10), the kit comprising:
a first coating material (112);
a second coating material (114), the first and second coating materials (112, 114) being different;
a maskant (116) for isolating a first coated portion (105) of the component of the gas turbine engine (10) from a second coated portion (108) of the component; and
a coating system (120) configured to simultaneously deposit the first and second coating materials (112, 114) on the first and second coated portions (105, 108) of the component, respectively.

13. The kit of claim 12, wherein the maskant (116) comprises a masking chamber (118), wherein the masking chamber (118) is filled with the first coating material (112), the first coating material (112) comprising a chromium-based powder.

14. The kit of claim 12 or claim 13, wherein the first and second coating materials (112, 114) comprise at least one of chromium-based coatings, aluminum-based coatings, silicon-based coatings, platinum coatings, or palladium coatings.

15. The kit of any of claims 12 to 14, wherein the coating system (120) comprises a coating furnace (122) configured to apply the second coating material (114) on the second coated portion (108) of the component, the second coating material (114) comprising an aluminum-based material.
